# EUROPÄISCHE PATENTSCHRIFT

(11) **EP 2 497 705 B1**
(45) Veröffentlichungstag und Bekanntmachung des Hinweises auf die Patenterteilung: **03.12.2014**
(21) Anmeldenummer: 12001159.8
(22) Anmeldetag: 22.02.2012
(51) Int. Cl.: B62M 9/10

(54) **Antriebseinheit am Hinterrad eines Fahrrades**
Drive unit on the rear wheel of a bicycle
Unité d'entraînement sur la roue arrière d'un vélo

(30) Priorität: 11.03.2011 DE 102011013695
(43) Veröffentlichungstag der Anmeldung: 12.09.2012
(73) Patentinhaber: SRAM Deutschland GmbH, 97424 Schweinfurt (DE)
(72) Erfinder: Braedt, Henrik, 97218 Gerbrunn (DE)

(56) Entgegenhaltungen:
- DE-U1-202007 014 445
- US-A- 5 192 249
- US-A- 5 514 042
- US-A- 5 716 297
- US-A- 6 139 456

## Beschreibung

Der Gegenstand des Patentes ist eine Antriebseinheit am Hinterrad eines Fahrrades mit einem Ritzel einer Mehrfach-Ritzelanordnung sowie einer Rollenkette, wobei das Mehrfachritzel auf einem Freilaufkörper an der Hinterradnabe des Fahrrades angeordnet ist. Ein Freilaufkörper ist durch einen Antreiber einer Kassettennabe oder durch einen Außenring eines an der Nabenhülse anschraubbaren Freewheels gebildet. Er ist drehbar gegenüber der Nabenachse abgestützt und weist eine Drehkopplung gegenüber einer Nabenhülse in Vorwärtsdrehrichtung auf und ist in Rückwärtsdrehrichtung gegenüber der Nabenhülse frei drehbar.

Ritzel am hinteren Laufrad sind Hauptbestandteile des Antriebsstranges von modernen Mountain-Bikes und Rennrädern. Mittlerweile werden bis zu elf Ritzeln in einer Mehrfach-Ritzelanordnung angeboten.

Die Ritzel gehören zu den hoch belasteten Komponenten und sind Verschleißteile. Konventionelle Ritzel weisen an ihrer Innenkontur ein Mitnahmeprofil auf, an dem eine Mitnahmeverbindung zu einem Antreiber einer Kassettennabe oder zum Außenring eines Freewheels besteht. Die Zuordnung von benachbarten Ritzeln zueinander in Umfangsrichtung, die beim Vorgang des Umlegens der Kette von einem Ritzel zum benachbarten Ritzel von entscheidender Bedeutung ist, ergibt sich dadurch, wie die Mitnahmeprofile der Ritzel am Antreiber bzw. dem Außenring des Freewheels in Eingriff sind.

Eine Entwicklungstendenz bei Mehrfach-Ritzelanordnungen ist die Gewichtsreduzierung. Zum Erreichen dieser Zielsetzung bei Erfüllung der genannten Grundanforderungen werden Ritzel aus einem leichten Material hergestellt, z. B. aus Aluminium. Nachteilig dabei sind die geringere Härte und die kleinere Belastbarkeit durch Druckkräfte auf die Bauteiloberfläche. Dieser Aspekt wirkt sich vor allem dort aus, wo die Druckkräfte aufnehmenden Kontaktflächen in ihrer räumlichen Ausdehnung noch verkleinert werden, wie das bei verschiedenen Arten von Schalthilfen zum Unterstützen der Schaltfunktion entlang einer Schaltgasse der Fall ist. Eine Schaltgasse erstreckt sich entlang der von einem Ritzel vom Nachbarritzel ablaufenden Rollenkette, und zwar sowohl für das Umlegen der Kette vom kleineren zum benachbarten größeren, als auch vom größeren zum benachbarten kleineren Ritzel. Es entfallen dabei Anteile von Flächen, die für den Eingriff und den Kontakt zwischen einer Rolle der Antriebs-Rollenkette und der Last übertragenden Flanke an einem Zahn notwendig sind.

Es stellt sich nachteilig ein größerer Verschleiß an den geschwächten Zähnen ein, der bei der Verwendung von Ritzeln zum Beispiel aus Aluminium zu schnell einen Grenzwert übersteigt, über dem ein ordnungsgemäßer Betrieb des Ritzels nicht mehr gewährleistet ist.

Es ist somit die Aufgabe der vorliegenden Erfindung, ein Ritzel aus einem weicheren Werkstoff als Stahl so mit Schalthilfen auszustatten, dass nur ein noch vertretbarer Verschleiß eintritt. Gelöst wird diese Aufgabe dadurch, dass die Schalthilfen an den mit der Rollenkette in Eingriff kommenden Zähnen so angeordnet werden, dass keine oder nur minimale Einbußen an der Kontaktfläche eintreten. Eine grundlegende Überlegung spielt dabei der Ansatz, die Rollenkette, die aus einer alternierenden Folge von Außenlaschengliedern und Innenlaschengliedern besteht, nur in bestimmten Situationen umschalten zu lassen.

Bei konventionellen Ritzeln aus Stahl erlauben die Schalthilfen Umschaltvorgänge, wenn beim Umschaltvorgang sowohl ein Außenlaschenglied, als auch ein Innenlaschenglied in axialer Richtung benachbart zu einem Referenzzahn anliegt, also zwei verschiedene Kettenlaschen-Zahn-Zuordnungen vorliegen.

Mit dem erfindungsgemäßen Ansatz werden im Gegensatz dazu Schaltgassen nicht für beide Kettenlaschen-Zahn-Zuordnungen bereitgestellt, an den Umfangspositionen, bei denen günstige Relativpositionen zwischen den Zähnen am kleineren und am benachbarten größeren Ritzel anzutreffen sind, mit einem Abstand der genannten Zähne zueinander, der dem ganzzahligen Mehrfachen der Kettenteilung entspricht. Bei dem erfindungsgemäßen Ritzel werden Umschaltvorgänge nur erlaubt, wenn ein Innenlaschenglied am Referenzzahn anliegt.

Der Ansatz des Vermeidens des Eingriffs der Kette mit einem Außenlaschenglied an einem günstig positionierten Referenzzahn in Verbindung mit einer entsprechenden Gestaltung von Schaltgassen beziehungsweise des Weglassens von Schaltgassen an günstigen Relativpositionen, wurde an Mehrfach-Ritzelanordnungen schon umgesetzt, allerdings mit anderer Zielsetzung als bei der Erfindung.

In der EP 1 522 490 ist ein bestimmter Zahn bewusst so gestaltet, dass kein Eingriff mit der Außenlasche eines Außenlaschengliedes zustande kommen kann.

Dieser Zahn wäre infolge einer erfüllten Bedingung in Hinsicht auf seinen Abstand zum letzten am kleineren Ritzel noch in Eingriff befindlichen Zahn am besten geeignet für den Eingriff einer Außenlasche der Kette mit diesem Zahn. Mit diesem gestalterischen Konzept konnten statt einer einzigen aber großen Einprägung mehrere Einprägungen am Ritzel als Bestandteil der Schaltgasse vorgesehen werden, für die beiden Situationen der Zuordnungen entweder einer Außenlasche zum betrachteten Zahn oder einer Innenlasche an diesem Zahn.

In der EP 1 188 658 wurde an einem Ritzel an einer Position, an dem sich eine Schaltgasse für das Umschalten vom kleineren benachbarten Ritzel auf das betreffende Ritzel befand, diese Schaltgasse komplett aufgegeben, um Platz für das Vorsehen einer Schaltgasse vom betreffenden Ritzel herunter auf das benachbarte kleinere Ritzel zur Verfügung zu haben.

Im Gegensatz dazu wird bei der erfindungsgemäßen Gestaltung eines Ritzels angestrebt, eine große Fläche für den Kontakt von Kettenrolle und Last-Zahnflanke zu erzielen. Dazu weisen die Ritzelzähne generell eine große Dicke in der Richtung senkrecht zu ihrer Haupterstreckungsebene auf, und die Schwächung der Lastflanken der Zähne entlang von Schaltgassen wird auf ein Minimum reduziert.

Außerdem wird die Schaltgasse nur für den Eingriffs-Fall ausgelegt, bei dem ein Innenlaschenglied einem Referenzzahn zugeordnet ist. Im anderen Fall, bei dem ein Außenlaschenglied dem Referenzzahn zugeordnet ist, wird durch die Gestaltung der Zähne vermieden, dass die Kette auf das Ritzel wechselt. Dazu weist der Referenzzahn Anfasungen auf, die einen Eingriff einer Außenlasche verhindern.

Bei der erfindungsgemäßen Ritzelgestaltung wird beim Wechsel der Kette von einem kleineren zu einem größeren Ritzel ein Außenlaschenglied durch den Rand einer Aussparung radial nach innen an einem Referenzzahn abgestützt und auf ein größeres radiales Niveau gehoben. Die Aussparung reicht nicht bis zur Lastflanke, sondern lässt diese unbeeinflusst. Beim normalen Eingriff zwischen Rollenkette und Referenzzahn ohne Umschaltvorgang, bei dem ein Kontakt zwischen Kettenrolle und Lastflanke stattfindet und eine Kraft übertragen wird, steht demzufolge eine große Kontaktfläche zur Verfügung. Der Rand der Aussparung erstreckt sich in der bevorzugten Ausführungsform bis zur Spitze des Zahnes. Die Aussparung hat in Umfangsrichtung eine Ausdehnung bis zum nächsten in Drehrichtung folgenden Zahn.

Ergänzt wird diese Formgebung durch die Gestaltung der entgegen der Drehrichtung folgenden Zähne, an denen Kehlen an den Zähnen nur radial außerhalb der Kontaktflächen zwischen Kettenrolle und Lastflanke vorgesehen sind.

Rein geometrische Ähnlichkeiten existieren zwischen den erfindungsgemäßen Aussparungen und Kehlen einerseits und Aussparungen in der US 5,464,373 sowie der US 5,876,296 andererseits, wo allerdings das Vorsehen von Aussparungen zu einer starken Verkleinerung der Kontaktfläche zwischen Kettenrolle und Lastflanke führt.

Ähnlichkeiten bezüglich der Abstützung der Außenlasche der Kette an einem Rand einer Aussparung gibt es auch zu der gattungsbildenden DE 44 18 407. Aber auch hier wird nicht angestrebt, eine unverletzte Lastflanke beizubehalten.

Die bevorzugte Ausführungsform eines erfindungsgemäßen Ritzels wird im Folgenden beschrieben.

Die Figuren zeigen im Einzelnen:
- Fig. 1:: Erfindungsgemäßes Ritzel, betrachtet von der Seite des nächst kleineren Ritzels (unten in der Darstellung), von radial außen (in der Mitte der Darstellung) sowie von der Seite, die dem kleineren benachbarten Ritzel abgewandt ist (oben in der Darstellung);

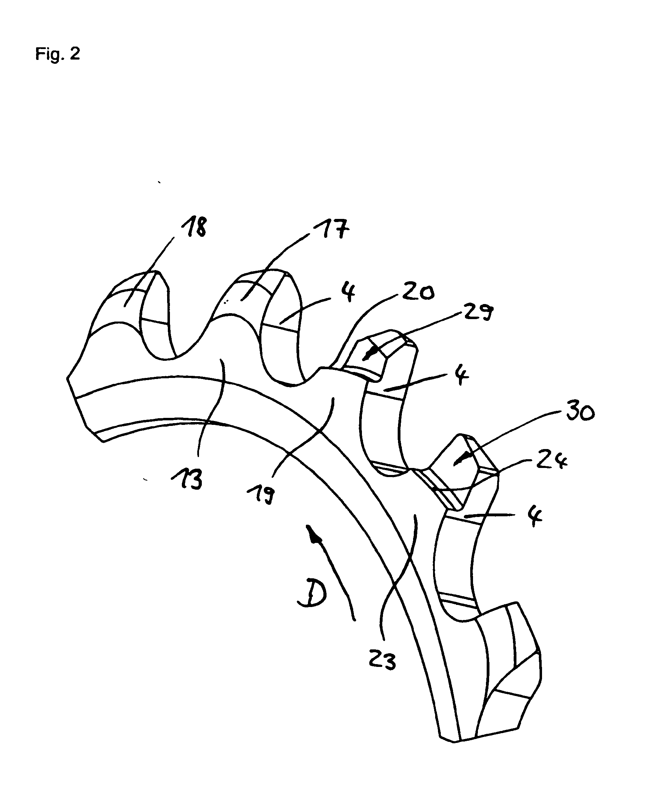

- Fig. 2:: Ritzel nach Fig. 1, betrachtet schräg von der Seite, die dem kleineren Nachbarritzel abgewandt ist;
- Fig. 3:: Gebräuchliche Rollenkette, in der linken Darstellung betrachtet parallel zur Richtung der Ebene, in denen sich die Kettenlaschen erstrecken sowie in der rechten Darstellung betrachtet in einer Richtung parallel zur Mittelachse der Kettenbolzen.

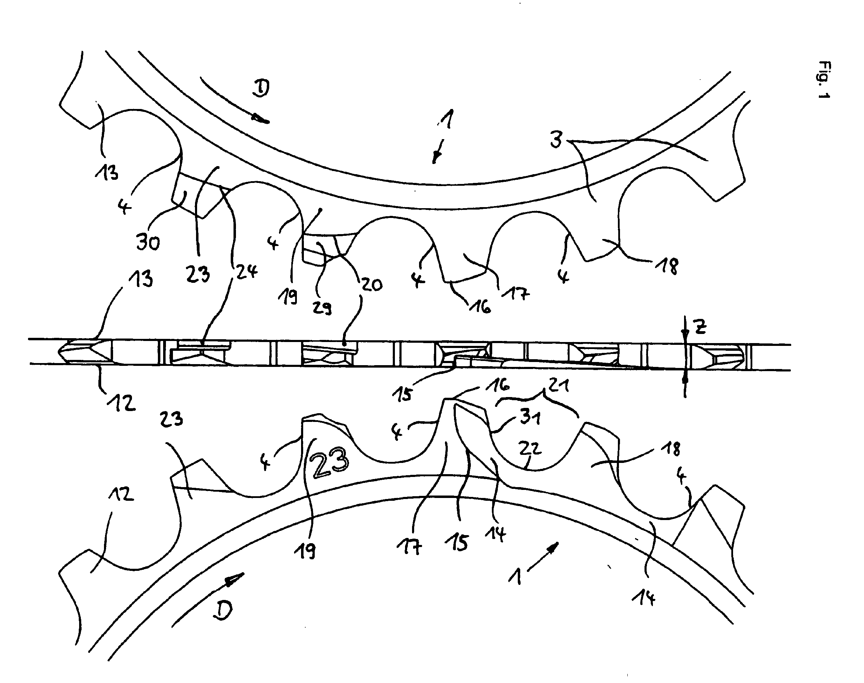

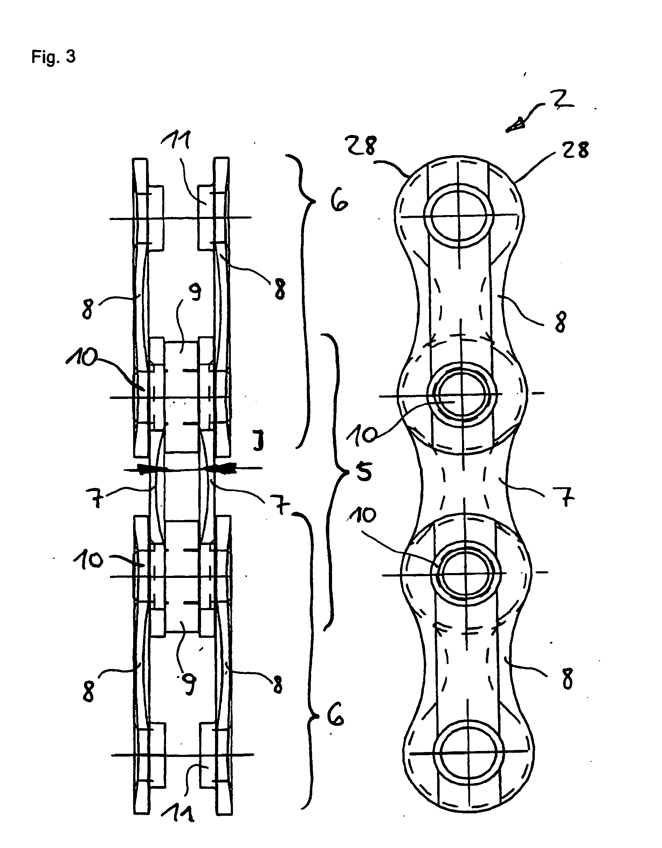

In Fig. 1 ist eine Aussparung 14 an der Planseite 12 des Ritzels zu sehen, wobei die Planseite 12 zur Seite des kleineren benachbarten Ritzels weist. Ein Rand 15 einer Aussparung 14 verläuft bis zur Zahnspitze 16 an einem Referenzzahn. Dieser Referenzzahn wird als Stützzahn 17 bezeichnet, weil er die Kette abstützt. Dort legt sich die in Fig. 3 erkennbare Außenrundung 28 der Außenlasche 8, die konzentrisch zur Mittelachse des Kettenbolzens 10 ist, in die Aussparung 14 hinein und stützt sich beim Anliegen entsprechender Kräfte auch in Bezug auf das Ritzel 1 nach radial innen hin ab. Die bandförmige Fläche im Verlauf des Randes 15 weist eine entsprechende Breite senkrecht zur Planseite 12 am Ritzel 1 auf, die der Tiefe der Aussparung entspricht. Die Außenlasche kommt in diese Position während des Umlegens der Rollenkette 2 zum betrachteten Ritzel 1. Die Tiefe der Aussparung 14 kann zu einem Ende hin abnehmen. Die Aussparung hat eine Längserstreckung entsprechend des Raumes, der von der beim Umlegen schräg gestellten Außenlasche 8 beansprucht wird. Im dargestellten Ausführungsbeispiel reicht die Aussparung 14 vom Stützzahn 17 über den in Drehrichtung D folgenden Abweisezahn 18 hinaus bis zur Lastflanke 4 des folgenden Zahnes.

Beim Vorgang des In-Eingriff-Kommens der Rollenkettenglieder 5, 6 an den Ritzelzähnen bewegen sich die Kettenglieder von radial auswärts nacheinander zu auf den Stützzahn 17 mit dem Rand 15 der Aussparung 14, auf einen Außenlaschenzahn 19 sowie auf einen Innenlaschenzahn 23. Der Stützzahn 17, der Außenlaschenzahn 19 sowie der Innenlaschenzahn 23 bilden entgegen der Drehrichtung D des Ritzels 1 eine Folge von Zähnen. Wenn sich die Außenrundung 28 am Rand 15 abstützt, ist eine Innenlasche 7 an der Seite von Stützzahn 17 positioniert, die der Planseite 12 des Ritzels 1 entspricht. Die der betrachteten Innenlasche 7 entgegen der Drehrichtung D des Ritzels 1 folgende Außenlasche 8 der Kette greift über den Außenlaschenzahn 19 hinweg, so dass der Außenlaschenzahn 19 zwischen einem Paar von Außenlaschen 8 des betreffenden Außenlaschengliedes 6 positioniert wird. Damit befindet sich diese Außenlasche 8 näher zur Gegenseite 13 am Ritzel, die der Planseite 12 gegenüber liegt, als diejenige Außenlasche, deren Endbereich sich am Stützzahn 17 in der Aussparung 14 auf der Planseite des Ritzels befindet. Das entspricht der Richtung des Wechsels der Kette vom kleineren zum größeren Ritzel.

Ausgehend von der Gegenseite 13 des Ritzels weist der Außenlaschenzahn 19 eine Außenlaschenkehle 29 auf, in die die Außenlasche eintaucht und dabei an einer Außenlaschenkante 20 radial nach innen aufsitzt. An der Gegenseite 13 des Innenlaschenzahnes 23 ist eine Innenlaschenkehle vorgesehen, in die eine Innenlasche 7 eintaucht und an einer Innenlaschenkante 24 aufsitzt.

Das Vorsehen der Aussparung 14, der Außenlaschenkehle 29 und der Innenlaschenkehle 30 an aufeinanderfolgenden Zähnen 17, 19 und 23 entspricht den Möglichkeiten der Kette zur Abbiegung in eine Richtung senkrecht zur Planseite 12 des Ritzels 1 beim Umlegen der Kette. Es wird Raum geboten für all diejenigen Bestandteile der Kette, die mit den Ritzelzähnen in Kollision geraten könnten. Damit können die weiteren Bestandteile der Zähne außerhalb der Aussparung 14, der Außenlaschenkehle 29 und der Innenlaschenkehle 30 dicker ausgebildet werden, was einer Vergrößerung des Abstandes zwischen Planseite 12 und Gegenseite 13 und damit einer Vergrößerung der Zahndicke Z entspricht. Diese Vergrößerung des Abstandes zwischen Planseite 12 und Gegenseite 13 wird auch direkt als Vergrößerung der Kontaktflächen zwischen Kettenrollen 9 und Lastflanken 4 an den Ritzelzähnen 3 wirksam, weil in diese Kontaktflächen keine Schalthilfen auslaufen. Die Aussparung 14 am Stützzahn 17, die Außenlaschenkehle 29 und die Innenlaschenkehle 30 laufen nicht in die Kontaktflächen aus.

Bei einem Eingriff zwischen Rollenkette 2 und Ritzelzähnen 3 ohne Umschaltvorgang ist die Zahndicke Z vorgegeben durch den Abstand I zwischen den Innenlaschen 7, vermindert um einen Korrekturbetrag. Dieser Korrekturbetrag ist einzurechnen, weil immer möglich sein muss, dass die Zähne in den Zwischenraum zwischen den Innenlaschen eintreten.

Die Zahndicke Z kann auch von radial außen nach radial innen zunehmend gewählt werden, was vor allem beim Herstellen des Ritzels durch Drehen von Bedeutung ist.

Die Nutzung eines erfindungsgemäßen Ritzels bietet sich an für die Nutzung beim größten Abschlussritzel einer Mehrfach-Ritzelanordnung. Dann kann dieses Abschlussritzel auch ein nicht dargestelltes Mitnahmeprofil mit Eingriffselementen für die Weiterleitung der von der Kette empfangenen Kraft auf einen Antreiber an einer Hinterradnabe haben. Ein beschriebenes Ritzel kann in Verbindung mit weiteren, aus Blech gestanzten Einzelritzeln einer Mehrfach-Ritzelanordnung genutzt werden. Es bietet sich aber auch eine Nutzung mit mehreren, einstückig in einer konischen Tragstruktur verbundenen Ritzeln an. Zu dieser kann es eine Verbindung mittels Verbindungsstiften geben.

Erfindungsgemäße Ritzel können auch kleinere Ritzel einer Mehrfach-Ritzelanordnung sein. Dann sind allerdings noch weitere Funktionen mit Schalthilfen zu realisieren, die das Gesamtkonzept stören, wie beim Schalten vom betreffenden Ritzel auf das nächst größere benachbarte Ritzel. Auch treten Schaltverzögerungen stärker in Erscheinung, weil infolge von geringeren Zähnezahldifferenzen zwischen den benachbarten Ritzeln auch weniger Schaltgassen angeordnet werden können, und weil diese Schaltgassen dann mit 50 Prozent Wahrscheinlichkeit auch gerade nicht für das am Referenzzahn anliegende Kettenglied (Innenkettenglied oder Außenkettenglied) zum Umlegen der Kette geeignet und ausgelegt sind.

Die beschriebene Ausführungsform betrifft das Umlegen der Kette auf ein Ritzel, mit dem nächst kleineren Ritzel als Ausgangspunkt.

Mit entsprechenden Anpassungen für die Maßnahmen bei der Zahngestaltung ist der erfinderische Ansatz auch für das kleinste Abschlussritzel einer Mehrfach-Ritzelanordnung anwendbar. Die Anpassung betrifft dabei insbesondere das Umlegen der Kette auf das kleinste Abschlussritzel, mit dem nächst größeren Ritzel als Ausgangspunkt.

Abwandlungen des Konzeptes können darin bestehen, dass der Rand 15 der Aussparung 14 am Stützzahn 17 von der Zahnspitze 16 bis zu einem Punkt an der Gegenflanke 31 verläuft. Das abzustützende Kettenglied wird bei einer derartigen Gestaltung aber entsprechend weniger sicher abgestützt werden.

Eine weitere Möglichkeit der Abwandlung besteht darin, die Aussparung 14 vorrangig im Zahnzwischenraum 21, und zwar am Grund 22 des Zahnzwischenraumes 21 anzuordnen. Diese Abwandlung weist den Nachteil auf, dass es mehr eingrenzende Bedingungen bei der Gestaltung der Außenlaschenkehle 29 und der Innenlaschenkehle 30 gibt. Die Außenlaschenkante 20 und die Innenlaschenkante 24 müssen dann an einer weiter innen liegenden radialen Position angeordnet sein, an der sich schon die Kontaktfläche zwischen Kettenrolle und Lastflanke befindet, was zu einer verkleinerten Kontaktfläche führt.

Das entsprechend der Gegebenheiten für ein Ritzel an einem Hinterrad eines Fahrrades dargestellte Prinzip ist bei entsprechender Anpassung auch an einem Kettenrad an einer Mehrfachanordnung von Kettenrädern an einer Kurbeleinrichtung an einem Fahrrad anwendbar.

### Bezugszeichen

- 1: Ritzel
- 2: Rollenkette
- 3: Ritzelzahn
- 4: Lastflanke
- 5: Innenlaschenglied
- 6: Außenlaschenglied
- 7: Innenlasche
- 8: Außenlasche
- 9: Kettenrolle
- 10: Kettenbolzen
- 11: Kragen
- 12: Planseite
- 13: Gegenseite
- 14: Aussparung
- 15: Rand
- 16: Zahnspitze
- 17: Stützzahn
- 18: Abweisezahn
- 19: Außenlaschenzahn
- 20: Außenlaschenkante
- 21: Zahnzwischenraum
- 22: Grund des Zahnzwischenraumes
- 23: Innenlaschenzahn
- 24: Innenlaschenkante
- 28: Außenrundung
- 29: Außenlaschenkehle
- 30: Innenlaschenkehle

- D: Drehrichtung des Ritzels
- I: Innenlaschenweite
- Z: Zahndicke

## Patentansprüche

1. Antriebseinheit am Hinterrad eines Fahrrades mit einem Ritzel (1) einer Mehrfach-Ritzelanordnung sowie einer Rollenkette (2),
mit Ritzelzähnen (3) an der äußeren Peripherie des Ritzels (1), die Lastflanken (4) und Gegenflanken (31) aufweisen, zum Kontakt von Kettenrollen (9) einer Rollenkette (2) mit den Lastflanken (4),
wobei die Rollenkette (2) aus Innenlaschengliedern (5) und Außenlaschengliedern (6) besteht und wobei ein Innenlaschenglied (5) ein Paar von Innenlaschen (7) sowie konzentrisch zu Kettenbolzen (10) und drehbar gegenüber den Innenlaschen (7) angeordnete Kettenrollen (9) aufweisen sowie ein Außenlaschenglied (6) ein Paar von Außenlaschen (8) hat und wobei weiterhin Kettenbolzen (10) ein Innenlaschenglied (5) drehbar mit benachbarten Außenlaschengliedern (6) verbinden;
wobei an der zum kleineren benachbarten Ritzel weisenden Planseite (12) ein Stützzahn (17) am Ritzel (1) eine Aussparung (14) mit einem Rand (15) aufweist und an der zur Planseite (12) entgegengesetzt am Ritzel angeordneten Gegenseite (13) an den Ritzelzähnen Kehlen (29, 30) vorhanden sind, die dazu dienen, der von dem kleineren benachbarten Ritzel auf das Ritzel (1) zum Zweck der Gangumschaltung umgelegten Rollenkette (2) Raum zu bieten und Kontaktflächen zum Kontakt mit den Laschen (7, 8) der Rollenkette (2) bereitzustellen,
**dadurch gekennzeichnet,**
**dass** der Rand (15) der Aussparung (14) von radial innen nach radial außen entweder bis zur Zahnspitze oder bis zur Gegenflanke (31) des Stützzahnes (17), aber nicht bis zur Lastflanke des Stützzahnes (17) verläuft und eine Fläche entlang des Randes zum Kontakt mit der Außenrundung (28) einer Außenlasche (8) der Rollenkette (2) bietet und
die betreffende Außenlasche (8) in der Aussparung (14) aufgenommen wird;
wobei die Aussparung (14) am Stützzahn (17) eine Erstreckung vom Rand (15) bis zur Gegenflanke (31) des Stützzahnes (17) hat und auch auf Bereichen der Planseite (12) eines Abweisezahnes (18) angeordnet ist, der sich in Drehrichtung (D) benachbart zum Stützzahn (17) befindet.

2. Antriebseinheit nach Anspruch 1,
**dadurch gekennzeichnet,.**
**dass** der Stützzahn (17) so ausgebildet ist, nicht in den Zwischenraum zwischen einem Paar von Außenlaschen (8) einzutreten.

3. Antriebseinheit nach Anspruch 1 oder 2,
**dadurch gekennzeichnet,**
**dass** am Ritzel (1) der Abstand zwischen der Planseite (12) und der Gegenseite (13) so groß ist, wie die lichte Weite zwischen einem Paar von Innenlaschen (7), vermindert um einen Korrekturbetrag, der für die Relativbewegung zwischen Innenlaschen (7) und Ritzelzähnen (3) beim Eingreifen der Ritzelzähne (3) in den Raum zwischen dem Paar von Innenlaschen (7) notwendig ist.

4. Antriebseinheit nach Anspruch 2 oder 3,
**dadurch gekennzeichnet,**
**dass** ein Außenlaschenzahn (19) am Ritzel (1), der entgegen der Drehrichtung (D) benachbart zum Stützzahn (17) angeordnet ist, auf der Gegenseite (13) eine Außenlaschenkehle (29) mit einer sich in Umfangsrichtung erstreckenden Außenlaschenkante (20) aufweist, auf der sich eine Außenlasche (8) nach radial innen abstützen kann.

5. Antriebseinheit nach Anspruch 4,
**dadurch gekennzeichnet,**
**dass** sich die Außenlaschenkante (20) etwa an einer radial mittleren Position zwischen der Zahnspitze (16) und dem Grund (22) des Zahnzwischenraumes (21) befindet und an der Lastflanke (4) am Außenlaschenzahn (19) oberhalb des Kontaktpunktes der Kettenrolle (9) mit der Lastflanke (4) ausläuft.

6. Antriebseinheit nach Anspruch 4 oder 5,
**dadurch gekennzeichnet,**
**dass** ein Innenlaschenzahn (23) am Ritzel, der entgegen der Drehrichtung (D) benachbart zum Außenlaschenzahn (19) angeordnet ist, auf der Gegenseite (13) eine Innenlaschenkehle (30) mit einer sich in Umfangsrichtung erstreckenden Innenlaschenkante (24) aufweist, auf der sich eine Innenlasche (7) nach radial innen abstützen kann.

7. Antriebseinheit nach Anspruch 6,
**dadurch gekennzeichnet,**
**dass** sich die Innenlaschenkante (24) etwa an einer radial mittleren Position zwischen der Zahnspitze (16) und dem Grund (22) des Zahnzwischenraumes (21) befindet und an der Lastflanke (4) am Innenlaschenzahn (23) oberhalb des Kontaktpunktes der Kettenrolle (9) mit der Lastflanke (4) ausläuft.

8. Antriebseinheit nach Anspruch 5 oder 7,
**dadurch gekennzeichnet,**
**dass** der Zahnzwischenraum (21) in Umfangsrichtung des Ritzels (1) nur geringfügig länger ist als der Außendurchmesser der Kettenrollen (9), aber zumindest so groß, um eine schräg gestellte Kettenrolle (9) aufzunehmen, entsprechend des schrägen Verlaufs der beim Gangwechsel auf das Ritzel (1) auflaufenden Rollenkette (2).

9. Antriebseinheit nach einem der vorangegangenen Ansprüche,
**dadurch gekennzeichnet,**
**dass** das Ritzel (1) an seiner inneren Peripherie ein Mitnahmeprofil aufweist zur Weiterleitung der von der Rollenkette (2) auf das Ritzel (1) übertragenen Kettenzugskräfte auf ein radial innen angeordnetes Teil der Hinterradnabe.

10. Antriebseinheit nach einem der vorangegangenen Ansprüche,
**dadurch gekennzeichnet,**
**dass** das Ritzel (1) mittels Verbindungsstiften mit dem nächst kleineren Ritzel verbunden ist.

11. Antriebseinheit nach einem der vorangegangenen Ansprüche,
**dadurch gekennzeichnet,**
**dass** das Ritzel (1) aus einem leichten Material hergestellt ist, zum Beispiel aus Aluminium oder Titan.

## Claims

1. Drive unit on the rear wheel of a bicycle, with a pinion (1) of a multiple pinion arrangement and with a roller chain (2),
with pinion teeth (3) on the outer periphery of the pinion (1), which have load flanks (4) and counter flanks (31), for the contact of chain rollers (9) of a roller chain (2) with the load flanks (4),
the roller chain (2) consisting of inner plate links (5) and outer plate links (6), and an inner plate link (5) having a pair of inner plates (7) and chain rollers (9) arranged concentrically to chain bolts (10) and rotatably with respect to the inner plates (7), and an outer plate link (6) having a pair of outer plates (8), and, furthermore, chain bolts (10) connecting an inner plate link (5) rotatably to adjacent outer plate links (6), and, on the plane side (12) which points towards the smaller adjacent pinion, a supporting tooth (17) on the pinion (1) having a clearance (14) with a margin (15), and, on the other side (13) arranged opposite to the plane side (12) on the pinion, there being present on the pinion teeth grooves (29, 30) which serve to afford space to the roller chain (2) laid around from the smaller adjacent pinion to the pinion (1) for gear-change purposes and to provide contact surfaces for contact with the plates (7, 8) of the roller chain (2),
**characterized**
**in that** the margin (15) of the clearance (14) runs radially from the inside radially outwards either as far as the tooth tip or as far as the counter flank (31) of the supporting tooth (17), but not as far as the load flank of the supporting tooth (17), and affords a surface along the margin for contact with the outer rounding (28) of an outer plate (8) of the roller chain (2), and the respective outer plate (8) is accommodated in the clearance (14), the clearance (14) on the supporting tooth (17) having an extent from the margin (15) as far as the counter flank (31) of the supporting tooth (17) and also being arranged on regions of the plane side (12) of a deflecting tooth (18) which is located adjacently to the supporting tooth (17) in the direction of rotation (D).

2. Drive unit according to Claim 1,
**characterized**
**in that** the supporting tooth (17) is designed so as not to penetrate into the interspace between a pair of outer plates (8).

3. Drive unit according to Claim 1 or 2,
**characterized**
**in that**, on the pinion (1), the distance between the plane side (12) and the other side (13) is as great as the clear width between a pair of inner plates (7), minus a correcting amount which is necessary for the relative movement between inner plates (7) and pinion teeth (3) when the pinion teeth (3) engage into the space between the pair of inner plates (7).

4. Drive unit according to Claim 2 or 3,
**characterized**
**in that** an outer plate tooth (19) on the pinion (1), the said outer plate tooth being arranged adjacently to the supporting tooth (17) opposite to the direction of rotation (D), has on the other side (13) an outer plate groove (29) with a circumferentially extending outer plate edge (20) on which an outer plate (8) can be supported radially inwards.

5. Drive unit according to Claim 4,
**characterized**
**in that** the outer plate edge (20) is located approximately in a radially middle position between the tooth tip (16) and the bottom (22) of the tooth interspace (21) and runs out at the load flank (4) on the outer plate tooth (19) above the point of contact of the chain roller (9) with the load flank (4).

6. Drive unit according to Claim 4 or 5,
**characterized**
**in that** an inner plate tooth (23) on the pinion, the said inner plate tooth being arranged adjacently to the outer plate tooth (19) opposite to the direction of rotation (D), has on the other side (13) an inner plate groove (30) with a circumferentially extending inner plate edge (24) on which an inner plate (7) can be supported radially inwards.

7. Drive unit according to Claim 6,
**characterized**
**in that** the inner plate edge (24) is located approximately in a radially middle position between the tooth tip (16) and the bottom (22) of the tooth interspace (21) and runs out at the load flank (4) on the inner plate tooth (23) above the point of contact of the chain roller (9) with the load flank (4).

8. Drive unit according to Claim 5 or 7,
**characterized**
**in that** the tooth interspace (21) is only slightly longer in the circumferential direction of the pinion (1) than the outside diameter of the chain rollers (9), but is at least so large as to accommodate an obliquely set chain roller (9) corresponding to the oblique run of the roller chain (2) running on to the pinion (1) during a gear change.

9. Drive unit according to one of the preceding claims,
**characterized**
**in that** the pinion (1) has on its inner periphery a take-up profile for transferring the chain tension forces, transmitted from the roller chain (2) to the pinion (1), to a part of the rear-wheel hub which is arranged radially on the inside.

10. Drive unit according to one of the preceding claims,
**characterized**
**in that** the pinion (1) is connected to the next smaller pinion by means of connecting pins.

11. Drive unit according to one of the preceding claims,
**characterized**
**in that** the pinion (1) is produced from a light-weight material, for example from aluminium or titanium.

## Revendications

1. Unité d'entraînement sur la roue arrière d'une bicyclette comprenant un pignon (1) d'un ensemble de pignons multiples ainsi qu'une chaîne à rouleaux (2),
comprenant des dents de pignon (3) sur la périphérie extérieure du pignon (1), qui présentent des flancs de charge (4) et des flancs conjugués (31), pour le contact des rouleaux de chaîne (9) d'une chaîne à rouleaux (2) avec les flancs de charge (4),
la chaîne à rouleaux (2) se composant d'organes de flasques internes (5) et d'organes de flasques externes (6) et un organe de flasques internes (5) présentant une paire de flasques internes (7) ainsi que des rouleaux de chaîne (9) disposés concentriquement par rapport à des boulons de chaîne (10) et de manière à pouvoir tourner par rapport aux flasques internes (7) et un organe de flasques externes (6) présentant une paire de flasques externes (8) et en outre des boulons de chaîne (10) reliant un organe de flasques internes (5) de manière rotative à des organes de flasques externes adjacents (6) ; une dent de support (17) sur le pignon (1) au niveau du côté plan (12) tourné vers le plus petit pignon adjacent présentant un évidement (14) avec un bord (15) et des cannelures (29, 30) étant prévues sur les dents de pignon au niveau du côté conjugué (13) disposé sur le pignon à l'opposé du côté plan (12), les cannelures servant à faire de la place pour la chaîne à rouleaux (2) transférée depuis le petit pignon adjacent au pignon (1) pour effectuer un changement de vitesses et à fournir des surfaces de contact pour le contact avec les flasques (7, 8) de la chaîne à rouleaux (2), **caractérisée en ce que** le bord (15) de l'évidement (14) s'étend depuis radialement à l'intérieur vers radialement à l'extérieur soit jusqu'à la pointe de dent soit jusqu'au flanc conjugué (31) de la dent de support (17), mais pas jusqu'au flanc de charge de la dent de support (17) et offre une surface le long du bord pour le contact avec la partie arrondie extérieure (28) d'un flasque extérieur (8) de la chaîne à rouleaux (2) et le flasque extérieur concerné (8) est reçu dans l'évidement (14) ;
l'évidement (14) au niveau de la dent de support (17) présentant une étendue depuis le bord (15) jusqu'au flanc conjugué (31) de la dent de support (17) et étant disposé également sur des régions du côté plan (12) d'une dent d'opposition (18) qui se trouve à côté de la dent de support (17) dans le sens de rotation (D).

2. Unité d'entraînement selon la revendication 1,
**caractérisée en ce que**
la dent de support (17) est réalisée de manière à ne pas entrer dans l'espace intermédiaire entre une paire de flasques extérieurs (8).

3. Unité d'entraînement selon la revendication 1 ou 2,
**caractérisée en ce que**
la distance entre le côté plan (12) et le côté conjugué (13) au niveau du pignon (1) est aussi grande que la distance intérieure entre une paire de flasques internes (7), moins une valeur de correction, qui est nécessaire pour le mouvement relatif entre les flasques internes (7) et les dents de pignon (3) lors de l'engagement des dents de pignon (3) dans l'espace entre la paire de flasques internes (7).

4. Unité d'entraînement selon la revendication 2 ou 3,
**caractérisée en ce**
**qu'**une dent de flasque externe (19) au niveau du pignon (1), qui est disposée dans le sens inverse du sens de rotation (D) en position adjacente à la dent de support (17), présente sur le côté conjugué (13) une cannelure de flasque externe (29) avec une arête de flasque externe (20) s'étendant dans la direction périphérique, sur laquelle peut s'appuyer radialement vers l'intérieur un flasque externe (8).

5. Unité d'entraînement selon la revendication 4,
**caractérisée en ce que**
l'arête de flasque externe (20) se trouve approximativement au niveau d'une position radialement centrale entre la pointe de dent (16) et la base (22) de l'espace intermédiaire entre les dents (21) et se termine au niveau du flanc de charge (4) sur la dent de flasque externe (19) au-dessus du point de contact du rouleau de chaîne (9) avec le flanc de charge (4).

6. Unité d'entraînement selon la revendication 4 ou 5,
**caractérisée en ce**
**qu'**une dent de flasque interne (23) au niveau du pignon, qui est disposée à côté de la dent de flasque externe (19) dans le sens inverse du sens de rotation (D), présente sur le côté conjugué (13) une cannelure de flasque interne (30) avec une arête de flasque interne (24) s'étendant dans la direction périphérique, sur laquelle peut s'appuyer radialement vers l'intérieur un flasque interne (7).

7. Unité d'entraînement selon la revendication 6,
**caractérisée en ce que**
l'arête de flasque interne (24) se trouve approximativement au niveau d'une position radialement centrale entre la pointe de dent (16) et la base (22) de l'espace intermédiaire entre les dents (21) et se termine au niveau du flanc de charge (4) sur la dent de flasque interne (23) au-dessus du point de contact du rouleau de chaîne (9) avec le flanc de charge (4).

8. Unité d'entraînement selon la revendication 5 ou 7,
**caractérisée en ce que**
l'espace intermédiaire entre les dents (21) dans la direction périphérique du pignon (1) est seulement légèrement plus long que le diamètre extérieur des rouleaux de chaîne (9), mais au moins suffisamment grand pour recevoir un rouleau de chaîne (9) incliné obliquement de manière correspondant à l'allure oblique de la chaîne à rouleaux (2) passant sur le pignon (1) lors d'un changement de vitesses.

9. Unité d'entraînement selon l'une quelconque des revendications précédentes,
**caractérisée en ce que**
le pignon (1) présente sur sa périphérie interne un profil d'entraînement pour transférer les forces de traction de chaîne transmises de la chaîne à rouleaux (2) au pignon (1) à une partie du moyeu de roue arrière disposée radialement à l'intérieur.

10. Unité d'entraînement selon l'une quelconque des revendications précédentes,
**caractérisée en ce que**
le pignon (1) est connecté au moyen de goupilles de connexion au plus petit pignon suivant.

11. Unité d'entraînement selon l'une quelconque des revendications précédentes,
**caractérisée en ce que**
le pignon (1) est fabriqué en un matériau léger, par exemple en aluminium ou en titane.
